# EUROPEAN PATENT APPLICATION

(11) **EP 1 486 432 A1**
(43) Date of publication of application: **15.12.2004**
(21) Application number: 04011048.8
(22) Date of filing: 03.11.2000
(51) Int. Cl.: B65D 79/00, B67D 1/04

(54) **Beverage dispensing and beverage containers**

(30) Priority: 05.11.1999 GB 9926339; 02.12.1999 GB 9928564; 28.02.2000 GB 0004677; 29.06.2000 GB 0016042; 29.06.2000 GB 0016044
(62) Divisional of application: 00973044.1
(71) Applicant: Nytrotec Beverages Ltd, Cork (IE)
(72) Inventor: Byrne, Charles Michael, Cork (IE); Murphy, Matthew Francis, Ovens Co. Cork (IE)
(74) Representative: Perry, Robert Edward

(57) **Abstract**

A container contains coffee, tea or a soft drink saturated with an inert gas and, if necessary or desired, a foam-retaining agent. Alternatively, a bulk container includes coffee, tea or a soft drink and, if necessary or desired, a foam-retaining agent, in association with means for dispensing the soft drink, and means for introducing an inert gas on dispensing.

By means of the invention, a non-alcoholic drink is dispensed with a creamy head.

## Description

### Field of the Invention

This invention relates to the dispensing of beverages, and to beverage containers. In particular, the invention relates to devices that can provide a beverage with a "head".

### Background of the Invention

When dispensing carbonated beverages, particularly beers and especially draught stout, it is desirable that the beer should have a close-knit creamy head. The formation of the head, comprising fine bubbles, and known as puthering, may be achieved by injecting inert gas into draught beer, for dispensing in bars. These systems are not practical for domestic consumption. For that market, the past decade has seen the development of beer cans having an openable closure and including an insert that gasifies the beer when the closure, e.g. a ring-pull, is opened.

An early example of such an insert is described in GB-A-2183592. An improved insert is described in WO-A-91/07326. The insert has a pressure-responsive valve, and may be arranged so that its internal pressure is increased after the container is sealed; alternatively, the valve may have a different release pressure when initially inserted into the container from that when opening it. It is a requirement that the insert contains substantially no oxidising gas.

The beverages coffee and tea are typically served hot or iced. Iced tea is especially popular in southern states of the USA and in the Middle East. One variant of iced coffee, that is particularly popular around the Mediterranean, is café frappé. This is usually made in bars, by whisking individual cups of coffee, to entrain air and produce a head of bubbles. Ice may then be added.

Soft drinks such as soda, lemonade and colas are typically carbonated. They do not give a creamy head when dispensed, e.g. from bottles or cans, whether or not the container includes an insert of the type described above. In technical terms, puthering, as seen particularly in stout, does not occur. This means that beverages such as cream soda are not available with the most efficient, economical, modem-day packaging technology.

### Summary of the Invention

The present invention is based on the surprising discovery that puthering can be achieved in coffee and tea, so that they can be dispensed with a creamy head, by the introduction of nitrogen, e.g. by injection. More particularly, it has been appreciated that beverage containers of the type that have been made for gasifying beer can be adapted to the ready, convenient preparation of café frappé, but that the insert required for beer may not be necessary.

Further, the present invention is based on the realisation that puthering can be achieved in soft drinks, and that systems of the type that have been made for gasifying beer can be adapted to the ready, convenient preparation of soft drinks having a creamy head.

According to one aspect of the present invention, in a container of the type having an openable closure and including a beverage and (optionally) also an insert that gasifies the beverage when the closure is opened, the beverage is coffee or tea and is saturated with an inert gas such as nitrogen.

According to a second aspect of this invention, a container (or keg) includes coffee or tea, and is provided in association with means for dispensing the beverage, and means for introducing an inert gas on dispensing.

According to a third aspect of the invention, a container (or keg) includes coffee or tea, saturated with an inert gas.

According to a fourth aspect of the present invention, in a container of the type having an openable closure and including a beverage and (optionally) also an insert that gasifies the beverage when the closure is opened, the beverage is a soft drink saturated with inert gas and which additionally includes polyglycol alginate or another foam-retaining agent.

According to a fifth aspect of this invention, a container (or keg) includes a soft drink and a foam-retaining agent, and is provided in association with means for dispensing the beverage, and means for introducing an inert gas on dispensing.

According to a sixth aspect of the invention, a container (or keg) includes a soft drink saturated with an inert gas, and a foam-retaining agent.

### Description of the Invention

One aspect of the invention relates to the dispensing of coffee, tea or a soft drink. For this purpose, the beverage may be prepared and stored in bulk, i.e. in a volume of more than one, and typically more than 20 or 50 cups, e.g. as in a beer keg. On dispensing, typically under autogenous or applied pressure through a shear head, an inert gas such as nitrogen (with or without added CO₂) is introduced, to give a beverage having a creamy head. Injectors are well known; one example is available under the trade name Cellarstream.

Another aspect of the invention relates to smaller containers, suitable for domestic use. This aspect may be described by way of example only with reference to the drawings and associated description in WO-A-91/07326, the content of which is incorporated herein by reference. In that document, it is intended that the beverage 7 should be beer and that the insert 5 should contain carbon dioxide, nitrogen or a mixture thereof; according to the present invention, the beverage is coffee and, while the gas may be the same, it can also, if desired, be air or another oxygen-containing gas. As will be understood by those skilled in the art, the pressure generated on opening the closure, the relative volumes of liquid and head space in the container, and other criteria appropriate to the desired appearance of the coffee when dispensed can be chosen as necessary. More broadly, however, such an insert is not required for use in this invention.

The materials of the container and the insert can be of the type that are already known for carbonated beer containers, and as described in WO-A-91/07326. The container may be a can or bottle.

Coffee or tea may contain a predetermined amount of known flavourings and/or additives such as or other sweetener, sugar, milk/milk substitute, cream, stabilisers, anti-oxidants, emulsifiers, alcohol (e.g. as a liqueur or spirit, such as in the case of Irish coffee) and flavouring; suitable flavourings, especially for coffee, include chocolate, cocoa, vanilla or other essences and/or fig or chicory extract Clearly, it is possible to provide products of the invention in which the coffee or tea is unsweetened, or pre-sweetened to different degrees, and these may be chosen by the consumer according to taste.

Similarly, a soft drink may contain a predetermined amount of known flavourings and/or additives such as one or more of sweeteners, stabilisers, anti-oxidants, emulsifiers, alcohol and flavourings; suitable flavourings include fruit flavours, such as orange, cherry, blackcurrant, strawberry, etc., ginger, vanilla or other essences.

If necessary or desired, a foam-retaining agent may be included. This may help to hold the "head", and it may also give the beverage a "smoothie" effect. A preferred foam-retaining agent is polyglycol alginate (PGA) which is already used in the brewing industry for the purpose of maintaining the foam head when beer is dispensed. Another agent that can be used is microcrystalline cellulose, e.g. as is sold under the name Avicel®. Other agents having the same desired effect can be determined by those skilled in the art, and include carragheenan and alginates. The agent should of course be approved for food use. The amount of this agent may be very small, e.g. 0.05 to 1%, possibly up to 5% by weight of the beverage, but can be chosen as necessary, e.g. with regard to the desired degree of puthering. Such an agent also provides body, so that a soft drink has the characteristics of a "smoothie".

As indicated above, café frappé has hitherto been made on an individual basis, usually in a warm ambient atmosphere, and has typically then had ice added to it. The present invention allows the beverage to be pre-chilled, thereby providing relative simplicity and economy when dispensed in bars, as well as making the drink much more readily available for domestic use.

The following Examples illustrate the invention.

### Example 1

Ground coffee was brewed, chilled to 0°C and injected with nitrogen at 4 bar, and canned with an insert as described above. The product was pasteurised in a tunnel pasteuriser at 67°C for 8 minutes. On opening the can and dispensing the coffee, it had a creamy head.

### Example 2

Ground coffee was brewed and chilled to 0°C. Whisky was added to give 5% g w/v of alcohol in the product which was then injected with nitrogen at 4 bar and bottled. The product was pasteurised in a tunnel pasteuriser at 67°C for 8 minutes. On opening the bottle and dispensing the coffee, it had a creamy head.

### Example 3

0.01 % PGA was added to cola which was canned (the can including an insert as described above) and saturated with nitrogen. On opening, the cola was dispensed into a glass; it had a creamy head.

## Claims

1. A container having an openable closure and including a beverage selected from coffee and tea, saturated with an inert gas.

2. A container having an openable closure and including a soft drink saturated with an inert gas and including a foam-retaining agent in an amount sufficient to cause puthering on opening the container.

3. A container including a bulk beverage selected from coffee and tea, in association with means for dispensing the beverage, and means for introducing an inert gas on dispensing.

4. A bulk container including a soft drink and a foam-retaining agent, in association with means for dispensing the soft drink, and means for introducing an inert gas on dispensing.

5. A container including a bulk beverage selected from coffee and tea, saturated with an inert gas.

6. A bulk container including a soft drink, saturated with an inert gas, and a foam-retaining agent.

7. A container according to any of claims 1, 3 and 5, wherein the beverage also includes one or more additives selected from sweeteners, milk, milk substitute, cream, stabilisers, anti-oxidants, emulsifiers, alcohol, and flavourings.

8. A container according to any of claims 2, 4 and 6, wherein the soft drink also includes one or more of sweeteners, stabilisers, anti-oxidants, emulsifiers, alcohol and flavourings.

9. A container according to any of claims 2, 4, 6 and 8, wherein the soft drink is a soda, lemonade, cola, ginger beer or root beer.

10. A container according to any of claims 1, 3, 5 and 7, wherein the beverage also includes a foam-retaining agent.

11. A container according to any of claims 2, 4, 6 and 8 to 10, wherein the foam-retaining agent is polyglycol alginate or microcrystalline cellulose.

12. A container according to any preceding claim, which is a can or bottle having, as the closure, a removable part defined by a line of relative weakness and bearing a nng or other manually-engageable tab.

13. A container according to any preceding claim, which also includes an insert that gasifies the beverage or soft drink when the closure is opened.

14. A container according to any preceding claim, wherein the inert gas is nitrogen.
